(19) Europäisches Patentamt

European Patent Office

Office européen des brevets

(11) EP 0 630 322 B1

(12) EUROPÄISCHE PATENTSCHRIFT

(45) Veröffentlichungstag und Bekanntmachung des Hinweises auf die Patenterteilung:
12.05.1999 Patentblatt 1999/19

(21) Anmeldenummer: 94905035.5

(22) Anmeldetag: 11.01.1994

(51) Int. Cl.⁶: **B32B 17/10**, B32B 5/24,
C03C 27/12, E06B 3/66

(86) Internationale Anmeldenummer:
PCT/EP94/00068

(87) Internationale Veröffentlichungsnummer:
WO 94/15784 (21.07.1994 Gazette 1994/17)

(54) **SICHERHEITSGLASELEMENT MIT WÄRMEDÄMMEIGENSCHAFTEN**

SAFETY GLASS ELEMENT WITH HEAT-INSULATING PROPERTIES

ELEMENT EN VERRE DE SECURITE AYANT DES PROPRIETES CALORIFUGES

(84) Benannte Vertragsstaaten:
AT BE CH DE DK ES FR GB GR IE IT LI LU MC NL PT SE

(30) Priorität: 11.01.1993 DE 4300480

(43) Veröffentlichungstag der Anmeldung:
28.12.1994 Patentblatt 1994/52

(73) Patentinhaber:
Kunert, Heinz, Dr.
50935 Köln (DE)

(72) Erfinder: **Kunert, Heinz, Dr.**
**50935 Köln (DE)**

(74) Vertreter:
**Degwert, Hartmut, Dipl.-Phys.**
**Prinz & Partner**
**Manzingerweg 7**
**81241 München (DE)**

(56) Entgegenhaltungen:
EP-A- 0 495 163          CH-A- 290 206
DE-A- 1 496 650          DE-U- 7 315 974
DE-U- 8 612 106          FR-A- 1 591 069
LU-A-    65 493

**Beschreibung**

Als Sicherheitsglas gelten Glasscheiben, die bei Bruch zu keinen ernsthaften Verletzungen führen. Seit jeher gehört hierzu das sogenannte Einscheiben-Sicherheitsglas, auch als vorgespanntes Glas bezeichnet, und das zweischeibige Verbundsicherheitsglas.

Beim ersteren ist der Verletzungsschutz dadurch gegeben, daß die Glasscheibe infolge der durch thermische Prozesse aufgebrachten Vorspannungen bei Bruch in kleine, stumpfkantige kaum verletzungsfähige Bruchstücke zerfällt. Verbundsicherheitsgläser setzen sich aus zwei Glasscheiben und einer dazwischenliegenden Kunststoff-Folie zusammen, die die beiden Scheiben miteinander klebend verbindet. Der Verletzungsschutz besteht darin, daß im Falle eines Bruches der Scheiben die entstehenden scharfkantigen Glasfragmente der Klebeschicht anhaften.

Solche monolitische Scheiben haben einen hohen, für Zwecke der Wärmedämmung untauglichen Wärmedurchgangswert (k-Wert) von fast $k = 6,0$ W/m$^2$K. Nur ein anliegendes Luftpolster kann diesen hohen Wärmedurchgangswert reduzieren. Insofern machen üblicherweise Sicherheitsgläser, die Wärmedämmfunktionen zu erfüllen haben, einen zweischeibigen Aufbau in der Weise eines Isolierglaselements erforderlich.

Ein aus Sicherheitsgläsern zusammengesetztes Isolierglaselement ist kostenaufwendig, insbesondere wenn Verbundgläser Verwendung finden, was bei Isoliergläsern für Fassaden- und Dachverglasungen zumindest für die dem Raum zugewandte Scheibe gewünscht wird. Im Falle des Gebrauchs von Einscheiben-Sicherheitsgläsern besteht ein Verletzungsrisiko durch das Herabfallen oft noch schollenartig zusammenhängender Krümelflächen. Deshalb wird es bei Isolierglaselementen für Dachverglasungen, wenn überhaupt, nur außenseitig angeordnet.

Im Falle der Anwendung von wärmedämmenden Isoliergläsern mit Sicherheitsfunktionen im Fassadenbereich und als Dachverglasungen stellt im besonderen Maße das Glasgewicht ein Problem dar. Es werden massive und aufwendige Stütz- und Rahmenkonstruktionen erforderlich. Bei Glasdicken von 5 - 6 mm je Einzelscheibe fällt für das Isolierglaselement ein Gewicht in der Größenordnung von 25 - 30 kg/m$^2$ an.

In der DE-AS 1.073.164 und DE-GM 7.315.974 werden Isoliergläser mit den Zwischenraum ausfüllenden Schaumkörpern bzw. Platten aus parallel zu den Glasdeckflächen angeordneten Glas- oder Kunststoffhohlfäden beschrieben. Diese Inletts erhöhen durch Reduktion konvektiver Wärmeübergänge die Isolationswirkung und dienen zugleich durch Lichtstreuung als Blendschutz. Keineswegs weisen diese Elemente Sicherheitseigenschaften auf. Die Inletts sind von brüchiger Struktur. Sie sind kaum in der Lage, Kräfte von der einen auf die andere Deckscheibe zu übertragen. Auch fehlt eine kraftschlüssige Anbindung an die Deckplatten.

Aus der DE 3.432.761 ist ein Isolierglaselement bekannt, das vornehmlich Sicherheitsglaseigenschaften aufweisen soll. Man erreicht dies durch Anbindung einer oder beider Glasscheiben an eine lichtdurchlässige splitterbindende Kunststoffschicht. Dem Isolierglaskonstrukt mangelt es aber wegen der groben, dünnwandigen und wenig rigiden Schaumstoffinletts aus organischem Material sowohl an der für eine Dach- und Fassadenverglasung wünschenswerten strukturellen Festigkeit und Steifheit, als auch an Alterungsbeständigkeit So sind diese Elemente insbesondere bei vorteilhafter Verwendung gewichtsmindernder Dünngläser weder geeignet, höhere Dachlasten aufzunehmen, noch größere Spannweiten zu überbrücken.

In Anbetracht der fehlenden strukturellen Festigkeit und Eigenstabilität des Schaumstoffinletts mangelt es auch an hinreichender Durchschlagzähigkeit. Auftreffenden massiven Fallkörpern gegenüber können diese Glaselemente wenig Widerstand bieten, was für die Sicherheit einer Dach- und Fassadenverglasung einen Mangel darstellt. Infolge der fehlenden Durchschlagzähigkeit des Inletts ist auch keine Ein- und Ausbruchhemmung gewährleistet

Die Verklebung von Glasscheiben mit Schaumplatten, die wegen der erforderlichen Lichtdurchlässigkeit aus relativ großvolumigen Blasen bestehen, über eine zusätzliche Kunststoffolie ist zwar möglich. Man bindet aber stets nur die Oberflächen dieser Schaumstoffplatten an. Wegen der äußerst dünnen Wandstärke des spröden Materials können weder Schub- noch Druckkräfte vom Schaumstoffinlett aufgenommen bzw. übertragen werden.

Eine kraftschlüssige Anbindung der Glasscheiben aneinander ist allein über einen Randklebesteg möglich, der auch alternativ als Randversiegelungssteg vorgesehen werden kann. Randversiegelungen sind bei Schaumstoffinletts durchaus erforderlich, da sonst in solche Platten Wasserdampf eindiffundiert, was zu einer erheblichen Minderung der Wärmedämmfähigkeit und zu Eintrübungen des Inletts führt.

Im Falle der Versiegelung des Scheibeninnenraums gegenüber der Atmosphäre wird die Verklebung der Scheibe mit dem Inlett und die spröde Schaumstruktur selbst durch die Aus- und Einwölbung der Scheiben infolge der temperaturbedingten Druckschwankungen des eingeschlossenen Luftvolumens auf die Dauer zerstört. Dessen ungeachtet hat sich bisher auch gezeigt, daß transluzente Kunststoff-Strukturkörper als Inletts in Isolierscheiben wegen der erheblichen Wärmebelastungen bei sommerlicher Aufheizung von annähernd 100 °C und ihrer mangelnden UV-Strahlungsbeständigkeit kurzzeitig verspröden und ihre Formhaltigkeit verlieren.

Bei dem Isolierglaselement gemäß DE 3.432.761 wird von Deckscheiben aus sehr dünnem Flachglas, vorzugsweise in einer Dicke von etwa 1,5 bis 2 mm ausgegangen. Dachplattenelemente müssen allerdings statisch in der Lage sein, zusätzliche Traglasten wie Schneelasten aufzunehmen, sowie Sogwirkungen durch heftige Windböen zu widerstehen.

Nicht von ungefähr sind für Überkopfverglasungen wegen dieser Belastungen Drahtglasscheiben mit einer Mindestdicke von 7 mm als Baunorm vorgeschrieben. Im Falle der Anwendung von Isolierglas verlangt man einen Aufbau, der außenseitig eine 5 mm dicke Scheibe aus vorgespanntem Glas und innenseitig Verbundglasscheiben von gleichfalls 5 mm Dicke erfordert.

Bei der vorgenannten Isolierglasscheibe ist an der Lastaufnahme lediglich die dünne Deckscheibe aus Flachglas von vorzugsweise 1,5 - 2 mm beteiligt. Das Acrylschaum-Inlett kann weder Lasten aufnehmen noch Kräfte auf die untere Deckscheibe übertragen. Dazu bedarf es eines Inletts aus einem rigiden Material, das kraftschlüssig mit beiden Glasplatten verbunden ist. Eine Glasscheibe von 2 mm, aber auch von 3 mm Dicke dürfte sich bei größeren Spannweiten unter der Last durchbiegen und wegen der geringen Zugfestigkeit des Glases brechen. Das gilt für Isolierglaselemente als Dachverglasungen generell. Das Aufnahmevermögen von Dachlasten ist hier allein von der Biegefestigkeit der oberen Deckscheibe abhängig.

Aus einem Aufsatz von F. B. Grimm: "Glas als tragender Baustoff: Glassandwich-Elemente" in glas + rahmen (1991) 19, 1020 - 1028 sind Verglasungselemente bekannt, bei denen die kraftschlüssige Koppelung der beiden Isolierglasscheiben entweder durch mechanisch verbundene oder schubfest verklebte Abstandhalter erreicht wird. Im ersten Fall greifen auf die Glasplatten aufgeschweißte Bolzen in Bohrungen ein, die in den Abstandhaltern vorgesehen sind. Alternativ können die Glasplatten durch Senkkopfschrauben miteinander verbunden werden, die durch Lochbohrungen geführt und in entsprechenden Gewindebohrungen der Abstandhalter befestigt werden.

Im zweiten Fall weisen die Abstandhalter einen Aufnahmeraum für einen Silikon-Klebstoff auf, wobei der Abstandhalter den Klebstoff vollständig umfaßt und so Formveränderungen bei Schubbeanspruchungen unterbindet. Als dritte Variante wird ein Sandwichkern aus zwei Zusammensteckbaren Teilplatten vorgeschlagen, der vollflächig mit den zwei Glasplatten verklebt wird.

Alle drei vorstehend beschriebenen Varianten können nicht als Elemente mit hervortretenden Wärmedämmeigenschaften angesprochen werden, jedenfalls nicht als solche, die über die Dämmleistungen von normalen zweischeibigen Isoliergläsern hinausgehen. Die vorgeschlagenen Abstandhalter, in welcher Form auch immer, stellen bei allen drei Konzepten infolge ihrer Dickwandigkeit letztlich Kältebrücken dar, die hohen Wärmedämmleistungen auf Grund der über sie infolge Wärmeleitung abfließenden Wärme entgegenstehen.

Das gilt auch für den Fall der Verfüllung des Scheibenzwischenraumes mit granulatförmigem Aerogel oder sonstigen Schaumstoffen mit extrem geringer Wärmeleitfähigkeit, Je stärker der Wärmedurchgang durch das Element infolge der die Abstandselemente umgebenden Schaumstoffe oder Aerogelpellets gemindert wird, desto größer ist das Potential oder die Wärmemenge, die durch die Kältebrücken abfließt. Im extremen Maße wirken sich solche Kältebrücken bei evakuierten Scheibenzwischenräumen aus. Die Wärmedämmung ist hier praktisch gleich der Wärmedämmung von üblichen Kunststoff-Stegplatten.

Um Wärmedurchgangszahlen unter $k = 1 \ W/m^2K$ zu erreichen, sind Stützelemente mit äußerst geringen Flächenanteilen mit Wandstärken im μm-Bereich erforderlich, und Zusätzliche Maßnahmen zur Unterdrückung des Wärmedurchgangs durch Strahlung vorzusehen.

Es ist in diesem Zusammenhang darauf hinzuweisen, daß Über-Kopf-Verglasungen insbesondere hohe Wärmedämmeigenschaften aufweisen müssen, und zwar nicht nur wegen der bekanntlich höheren Temperaturen im oberen Bereich des Raumes. Kaum Beachtung in der gegenwärtigen Bauphysik findet darüber hinaus die weit höhere Wärmeabstrahlung zum Himmelsraum weisender geneigter Flächen.

Solche Scheibenflächen stehen stets im Strahlungsaustausch mit dem Himmelsraum, der je nach Bewölkung Temperaturen aufweist, die 10 bis 30 K unter denen der umgebenden Lufthülle liegen. Dach- oder Über-Kopf-Verglasungen müssen deshalb stets in wirksamer Weise hochwärmedämmend ausgeführt sein, wobei der Emissionsminderung von Wärmestrahlung besondere Bedeutung zukommt.

Bezüglich der Sicherheitseigenschaften bedürfen die beiden ersten aus dem vorstehend genannten Aufsatz bekannten Varianten einer das Gewicht des Elements belastende Verbundglasscheibe.

Auch die Fähigkeit aller in diesem Aufsatz offenbarten Glassandwich-Elemente durch die vorgeschlagenen Abstandhalter bei Biegebeanspruchung Schubkräfte und kraftschlüssig Lasten auf die gegenüberliegende Glasplatte zu übertragen, ist begrenzt.

Die Fähigkeit von Glasplatten, Biegebeanspruchungen aufzunehmen, wie sie bei Über-Kopf-Verglasungen wegen der gegebenen Eigengewichtslasten und zusätzlich aufzunehmender Dachlasten auftreten, ist bekanntlich wegen der geringen Zugfestigkeit infolge der auf den Glasoberflächen stets vorhandenen Mikroeinkerbungen und Mikroeinrisse von vornherein stark gemindert. Wie allgemein bekannt, ist Glas ein Werkstoff, der auf punktuelle Extrembelastungen, die unter anderem durch Spannungsmaxima infolge starrer Verbindungen hervorgerufen werden, äußerst sensibel reagiert.

Was in dem vorgenannten Aufsatz nicht deutlich zum Ausdruck gebracht wird, ist die erhöhte Bruchsensibilität bei punktuell oder lokal begrenzter Aufhebung der Druckspannungen durch Überlagerung von Zugkräften an den Stirnflächen von auf Biegung beanspruchten Glasplatten. Dieser Abbau von Druckspannungen, die das Aufreißen der Mikrokerben und Einrisse verhindern, tritt aber bei der vorgeschlagenen Anbringung von Abstandhaltern mit aufgeschweißten Bolzen oder klebend aufgebrachter ringförmiger Abstandhalter infolge punktuell oder örtlich erzeugter Zugspannungen ein.

Sind diese Abstandhalter zudem an der Stirnfläche der auf Biegung beanspruchten Platte angebracht, so reichen schon bei geringen Durchbiegungen auftretende Zugspannungen aus, um Glasbrüche durch Aufbruch von Mikrorissen herbeizuführen.

Zur Abhilfe in Grenzen bedarf es dann dickerer Glasplatten, wobei das Eigengewicht der Verglasung - als Last geht das Gewicht beider Glasscheiben ein - bei weitüberspannender Glasfläche den Gebrauch solcher Elemente, wie die Praxis zeigt, kaum zuläßt.

Bei starrer Verklebung einer Kunststoffplatte mit einer Glasscheibe, die geeignet ist, Schubspannungen zu übertragen, werden gleichwohl infolge der Verklebung Druckspannungen durch aufgebrachte lokale Flächenspannungen auf den Scheibenoberflächen neutralisiert, so daß hier keineswegs von einer Kompensation der Bruchempfindlichkeit der armierten Glasscheiben die Rede sein kann.

Nachteilig erweist sich außerdem die geringe Alterungsbeständigkeit von Kunststoffplatten infolge der steten UV-Strahlungsbelastung sowie der hohen Erwärmung im geschlossenen Scheibenzwischenraum, die zu Temperaturen von annähernd 100°C führen kann. Eine frühzeitige Versprödung tritt insbesondere bei Kunststoffplatten auf, die unter ständiger Lasteinwirkung stehen. Ein Versprödungsbruch der Platten durch zusätzliche Biegebelastungen führt in der Regel gleichzeitig zum Bruch der mit dieser Platte starr verbundenen Glasscheibe und zwar infolge der auf die stirnseitige Oberfläche der Glasscheibe übertragenen Bruchspannungsspitzen. Die vorausgehende Mängeldiskussion bisher bekannter Systeme impliziert die Aufgabenstellung der Erfindung, nämlich ein transluzentes bzw. partiell transparentes Verglasungselement bereitzustellen, das sich durch hohe Wärmedämmleistungen auszeichnet und zudem als Sicherheitsglas Durchschlagfestigkeit und die Fähigkeit der Splitterbindung aufweist.

Zur Lösung dieser Aufgabe wird gemäß der Erfindung ein Verglasungselement mit wenigstens einer Scheibe und einer an einer der Deckflächen der Scheibe angeordneten, sich zumindest über einen wesentlichen Teil ihrer Flächenausdehnung erstreckenden Schicht aus parallel zu den Deckflächen der Scheibe verlaufenden Fasern bereitgestellt, welches dadurch gekennzeichnet ist, daß diese Faserschicht von einer ersten Decklage eines mit Harz imprägnierten Abstandsgewebes oder -gewirks gebildet und mit der Deckfläche der Scheibe kraftschlüssig verbunden ist, wobei das Abstandsgewebe oder -gewirk mindestens eine zweite, der ersten Decklage gegenüberliegende Decklage aufweist und die Decklagen durch quer zu denselben verlaufende, nach dem Aushärten des Harzes elastische und biegesteife Stegfäden miteinander verbunden sind.

Der in den Patentansprüchen gekennzeichneten Erfindung liegt somit auch die Idee zugrunde, zwei transparente Platten durch Abstandsgewebe oder Abstandsgewirke mittels ihrer biegesteifen Stegfädenstrukturen form- und kraftschlüssig zu verbinden.

Abstandsgewebe der hier verwendeten Art sind bereits bekannt. Sie bestehen im allgemeinen aus zwei Decklagen aus einem textilen Material, insbesondere aus Glas-, Kunststoff- oder Kohlenstoffasern, oder aber entsprechend spezifischer Anforderungen auch aus Mischungen solcher Materialien, die durch senkrecht oder winklig einlaufende Fäden, sogenannten Stegfäden, miteinander verbunden sind.

Diese Stegfäden, die je nach Anforderung unterschiedlich angeordnet sein können, halten gerüstartig die beiden Gewebelagen auf Abstand. Die Stegfäden bilden dabei in Form einer Schlaufen- oder Maschenstruktur im wesentlichen senkrecht auf den Decklagen stehende Stegreihen aus, wobei die Decklagen miteinander zusätzlich noch durch diagonal zu den Stegreihen verlaufende Fadenstrukturen verknüpft werden können. Derartige Abstandsgewebe wurden bisher vor allem als Distanzschichten zur Herstellung verschiedener Faserverbundwerkstoffe verwendet.

Abstandsgewebe und Abstandsgewirke werden bei ihrer Verarbeitung üblicherweise mit Harz getränkt bzw. imprägniert. Die Harztränkung kann sowohl durch Eintauchen in die Harzmasse als auch durch gleichmäßigen Auftrag auf das Gewebe erreicht werden. Das überschüssige Harz wird anschließend zwischen Folien oder Walzen ausgepreßt. Nach der Imprägnierung mit Harzen richten sich die Stegfäden ohne Hilfsmittel selbstständig wieder in die ursprüngliche Höhe auf und ermöglichen durch ihre definierbare Länge kalibrierende Abstände zu den Decklagen. Anordnung und Höhe der Fäden bestimmen die Festigkeit der nach Aushärtung der Harzschlichten entstehenden Sandwichkonstruktion.

Für die Herstellung der erfindungsgemäßen Verglasungselemente gelangen, in Anbetracht der Forderung nach möglichst hoher Biegesteifigkeit, vorzugsweise Abstandsgewebe oder -gewirke mit Decklagen und Stegfäden aus E-Glasfasern zur Anwendung. Bevorzugt sind die Stegfäden in den Abstandsgeweben so angeordnet, daß sie einander kreuzen.

Die mechanischen Belastungen werden durch die elastischen Stegfäden gleichförmig und ohne jegliche lokale Spannung über die Scheibenfläche verteilt. Trotz ihrer Elastizität bilden die Stegfäden einen starren, schubfesten Verbund der Platten, da sie einander kreuzend durch den Triangulierungseffekt insgesamt eine formsteife Verstrebung bilden. In vorteilhafter Weise sind die Stegfäden an ihren Kreuzungsstellen durch das ausgehärtete Harz miteinander verbunden, wodurch der Triangulierungseffekt noch zusätzlich verstärkt werden kann.

Ein solcher Glasplattenkörper bedarf zu seiner Stabilisierung keiner zusätzlichen tragenden Verrahmung. Er besitzt durch die miteinander starr und kraftschlüssig verbundenen Flächenteile eine Statik, die über jegliche aufgesetzten und tragenden Verrahmungen hinausgeht. Infolge des hohen Elastizitätsmoduls des Glases werden die Lasten von der gesamten Fläche der Scheibe aufgenommen.

Der Fertigungsprozeß eines erfindungsgemäßen Verglasungselementes gestaltet sich wie folgt:

Die Abstandsgewebe- oder -gewirklagen werden mit geeigneten Harzen getränkt und auf die Deckfläche der mit dem Abstandsgewebe zu verbindenden Scheibe bzw. zwischen ein zu verbindendes Scheibenpaar gelegt. Der "Sandwich-Körper" wird danach durch eine Presse geführt, um ein vollständiges Benetzen der Scheibenoberfläche mit der auf den Geweben aufliegenden viskosen Harzmasse und gleichfalls ein sicheres Anhaften zu gewährleisten. Beim Öffnen der Preßform richten sich die beim Anpreßvorgang flachgedrückten Stegfäden infolge von Rückstellkräften wieder auf und versteifen sich aufgrund des in der Art einer Schlichte anhaftenden Harzmaterials.

In vorteilhafter Weise erfolgt nach dem Preßvorgang ein kalibriertes Abheben der Decklagen bzw. der Scheiben voneinander durch Druckluft oder spezifische Saugvorrichtungen, bis der gewünschte Abstand zwischen den Decklagen erreicht ist. Bevorzugt kann der Aushärtungsprozeß des in das Glasgewebe eingebrachten Harzes durch Beigabe geeigneter chemischer Substanzen und/oder durch Zuführung von Energie, insbesondere von Wärmeenergie, beschleunigt werden.

Der Herstellungsprozeß kann auch in der Art erfolgen, daß die zur Verarbeitung anstehenden Fäden bereits eine Harzschlichte tragen, die nach dem Einlegeprozeß eine entsprechende Reaktivierung erfährt. Dieses Verfahren wird vorzugsweise dann anzuwenden sein, wenn für die Decklagen und für die Stegfäden jeweils unterschiedliche Harze oder aushärtende Klebematerialien Anwendung finden sollen.

Zur Verarbeitung können hauptsächlich Epoxid-, Polyurethan-, Phenol- und Polyesterharze gelangen, die an den vorzugsweise mit Silanschlichten versehenen Glasgarnen gut anhaften. Für ein sicheres Anhaften der Glasscheiben an die Decklagen sind insbesondere Polyurethanharze geeignet.

Die Gewirke können mit Stegfadenlängen bis 16 mm ausgelegt werden. Bei sorgfältiger Ausrichtung des Verklebungsprozesses und bei gezielten Maßnahmen zur zusätzlichen Unterstützung der Rückstellkräfte der Steglagen wird auch die volle Abstandsbreite für das Scheibenpaar erreicht. Bei Verwendung von geeigneten Polyurethanharzen, eventuell in Verbindung mit systemkonformem Primermaterial, wird ein sicheres und dauerhaftes Anhaften der Glasscheiben an die Deckgewebelagen gewährleistet.

Bei dem erfindungsgemäßen Glassandwich-Element werden örtliche Spannungsspitzen auf der Glasplatte vermieden. Durch die elastischen Deckschichten der Abstandsgewebe werden bei deren Anbindung an die Glasplatte über eine dünne Harzschicht keine Zugspannungen übertragen. Auch die Krafteinleitung auf das Abstandsgewirk verläuft infolge der Fadenstruktur der Deckschichten ohne Auftreten örtlicher Spannungsmaxima. Die abstandhaltenden Glasfadenstrukturen sind bei hoher Biegesteifigkeit extrem elastisch. Die Biegelasten werden über die Dichte der Fadenstruktur gleichmäßig über große Flächen aufgenommen und auf die gegenüberliegende Platte übertragen. Infolgedessen kann die Glasplatte in gewichtsparender Weise äußerst dünn dimensioniert werden, da der Plattenkörper letztlich ein kraftschlüssig verbundenes quasi-monolithisches Element darstellt.

Bei diesem Glaselement wird durch einen besonderen Mechanismus eine erstaunlich hohe Biegesteifigkeit herbeigeführt. Beim Aushärten des Harzes werden auf die Abstandsgewebestruktur Zugspannungen aufgebracht. Das kraftschlüssig mit den Deckplatten verbundene Inlett wirkt dann analog der Armierung in einer vorgespannten Zementplatte oder der unter Zugspannung stehenden Kernschicht thermisch vorgespannter Glasscheiben.

Durch eine vorauseilende Aushärtung der auf die Gewebedecklagen aufgebrachten Harzschichten, die das Anhaften der Decklagen mit den Glasplatten besorgen, gegenüber der Harzbeschichtung der Stegfäden und auch der Randzonen des Sandwichelements ist man in der Lage, diesen Mechanismus gezielt in vorteilhafter Weise zu verstärken. Eine solche Maßnahme wird daher als Verfahrensprozedur vorgeschlagen.

Bedingt durch das hohe Elastizitäts-Modul von Glasfasern erreicht das Glasplattengefüge eine außergewöhnlich hohe Schubfestigkeit und Druckfestigkeit senkrecht zum Schichtengefüge. Die hohe Biegesteifigkeit der Stegfäden und ihre dichte, in regelmäßiger Struktur angeordnete Flächenbesetzung verleiht dem "Scheibensandwich" die Formhaltigkeit und Strukturfestigkeit eines massiven Glaskörpers. Von einem solchen Verglasungselement, insbesondere auch einem zwei- oder auch mehrscheibigem Isolierglaselement, kann dann aufgrund seiner strukturellen Festigkeitseigenschaften ohne zusätzlich versteifende Verrahmung konstruktiv in der Weise einer monolithischen Glasscheibe Gebrauch gemacht werden. Vom Gewicht her ist hierbei praktisch nur das der gläsernen Deckplatten in Ansatz zu bringen.

Ein besonderer Vorzug ist ferner die Formhaltigkeit solcher Isolierglasstrukturen, die bei atmosphärischem Über- oder Unterdruck nicht, wie bei üblichen Isolierscheiben, Abweichungen von der Planimetrie aufweisen. Insofern entfallen auch die infolge dieser Einwirkungen gegebenen Belastungen des Randverbundes und damit verbundene Dichtungsschäden.

Ein unmittelbar aus der Sandwichstruktur des erfindungsgemäßen Verglasungselements resultierender Vorteil ist die Möglichkeit der Ausstattung solcher Elemente mit einem Vakuum, also die Evakuierung ihres umschlossenen Innenraums. Es bedarf hierzu lediglich einer diffusionsdichten Randabdichtung. Selbstverständlich sind bei diesen Scheibenelementen auch jegliche, die Wärmeleitung mindernde Gasfüllungen von ungleich höherer Beständigkeit.

Das erfindungsgemäße Verglasungselement besitzt den Vorteil, daß es nahezu uneingeschränkt alterungsbeständig ist. Es hält ferner hohen thermischen, atmosphärischen und solarradiativen Belastungen stand. Mechanischen Krafteinwirkungen gegenüber ist es robust und formstabil. Das erfindungsgemäße Verglasungselement kann als Dach- und Fassadenverglasung verwendet werden und ist in der Lage, hohe Lasten aufzunehmen und große Flächen zu überbrücken. Es wirkt als effektives Blendschutz- und Sonnenschutzglas und kann als Schallschutzglas sowie als ein- bzw. ausbruchhemmendes Glas Anwendung finden. Schließlich ist es in einfachster Ausführungsform bei hohen Wärmedämmwerten gegenüber bekannten Isolierglaselementen erheblich kostengünstiger zu nutzen.

Weitere Vorteile und Ausführungsformen der Erfindung ergeben sich aus der folgenden Beschreibung und den Zeichnungen, auf die Bezug genommen wird. In den Zeichnungen zeigen:

Fig. 1 bis Fig. 12 verschiedene Ausführungsformen des erfindungsgemäßen Verglasungselements im Querschnitt;

Fig. 13 und Fig. 14 schematische Ansichten verschiedener Abstandsgewebe, die im erfindungsgemäßen Verglasungselement Anwendung finden; und

Fig. 15 die schematische Ansicht eines erfindungsgemäßen Verglasungselement mit integriertem Fensterelement.

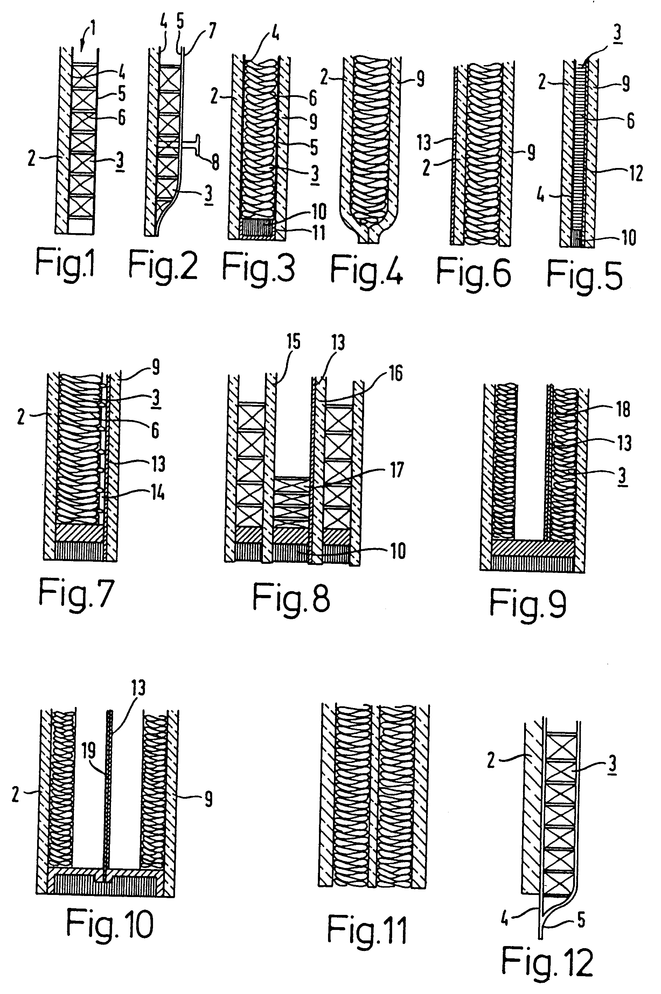

Fig. 1 zeigt ein erfindungsgemäßes Verglasungselement 1 in einer einfachen Ausführungsform. Es besteht aus einer einzelnen transparenten Scheibe oder Platte 2, insbesondere aus einer Glasscheibe, der ein Abstandsgewebe 3 mittels einer auf seiner Decklage 4 aufgebrachten Harzschicht anhaftet. Diese Harzschicht ist in Fig. 1 nicht dargestellt. Die gegenüberliegende Decklage 5 des Abstandsgewebes 3 ist durch quer zu den Decklagen 4, 5 verlaufende Stegfäden 6, die hier in ihrer Gesamtheit als etwa senkrecht auf den Decklagen 4, 5 stehende Stegreihen dargestellt sind, mit der an der Scheibe 2 angebrachten Decklage 4 kraftschlüssig verbunden. Zwischen den Stegreihen sind hier diagonal verlaufende Fadenstrukturen angeordnet, die in vorteilhafter Weise die Stabilität des Plattenkörpers erhöhen. Beide Decklagen 4, 5 enthalten parallel zu der Deckfläche der Scheibe verlaufende, gewebte oder gewirkte Fäden. Die Stegfäden 6 selbst sind so angeordnet, daß sie einander kreuzen. Sie können ganz oder teilweise mit Harz umgeben sein. Die Stegfäden bilden auf diese Weise starre, biegesteife Verstrebungen, die dem Abstandsgewebe im ausgehärteten Zustand die Eigenschaft eines hochelastischen, nach allen Richtungen belastbaren Formkörpers verleihen, der im Verbund mit der Scheibe 2 ein wärmedämmendes, mechanisch belastbares Verglasungselement mit Sicherheitsglas-Eigenschaften darstellt.

Alternativ zur direkten Anbindung des Abstandsgewebes 3 an die transparente Platte 2 mittels der zur Versteifung seiner Decklagen 4, 5 aufgebrachten Harzschicht kann eine Anbindung des Abstandsgewebes an die transparente Platte 2 bzw. an beidseitig angeordnete Platten auch mittels Klebefolien erfolgen. In diesem Falle kann man von vorgefertigten, also bereits ausgehärteten, mit Harz getränkten oder benetzten Abstandsgeweben ausgehen, dessen Decklagen beidseitig dann nur mit einer äußerst dünnen, zur Versteifung der Fäden notwendigen Harzschicht versehen sind.

Dies hat in erster Linie den Vorteil einer rationellen Vorfertigung der textilen Abstandsgewebeplatten, auch mit bereits einseitig oder beidseitig aufgebrachten Klebebeschichtungen, in laufender bzw. endloser Bandproduktion und eines jeweiligen Zuschnitts nach Maßgabe der benötigten Verglasungsflächen.

Für die Verklebung kann in vorteilhafter Weise PVB-Material (Polyvinylbutyral) in Form viskoser Flüssigkeit, bevorzugt aber in Folienform, Verwendung finden. Die mit Folien versehenen Abstandsgewebe werden zwischen die zu verbindenden Platten eingelegt. Das Sandwich durchläuft dann zunächst eine aufgeheizte Walze zur fixierenden Anhaftung und anschließend einen Autoklavprozeß zur endgültigen Verfestigung, der dem Folienmaterial auch zu einer glasklaren Transparenz verhilft.

Das wärmeisolierende Sicherheitsglaselement erhält durch die Integration der die Glasscheiben an den textilen Formkörper anbindenden Klebeschichten aus einem zäh-plastischen Material, vornehmlich dargestellt durch PVB-Folien in einer Dicke von etwa 0,37 mm bis 0,76 mm, nicht nur die Funktion einer Schalldämmscheibe, sondern gleichfalls auch die Qualität eines einbruchhemmenden Scheibenelements. Die Penetration eines solchen Scheibenelements ist zeit- und kraftaufwendig und ohne Schneid- und Schlagwerkzeuge nicht zu bewerkstelligen.

Die Klebefolien können monolithisch oder in einem Folienverbund mit weiteren Funktionen ausgestattet werden, so mit selektiven Reflexions- oder

Absorptionsfiltern für das solare Spektrum. Insbesondere könnten farblich oder figürlich gestaltete sowie lichtstreuende Klebefolien für Dekorzwecke oder zur optischen Abdeckung der Fadenstrukturen der textilen Abstandsgewebe Verwendung finden.

Für Glaselemente, die insbesondere hohen Biegebelastungen ausgesetzt sind, für Sicherheitsglaselemente mit dünnen Deckscheiben, aber auch für Scheibenelemente mit erhöhter Einbruchsicherheit werden für die Verklebung des Abstandsgewebes mit den Deckscheiben PVB-Folien oder Polyurethan-Folien mit integriertem Glasfaser-, Kunststoffaser- oder Kohlenstoffasermaterial in Form von Schnittmatten oder Endlosmatten vorgeschlagen. Die im Sandwich kraftschlüssig verklebte Folie bildet keine Flächenspannungen aus. Sie trägt zur Biegesteifigkeit des Glaselements bei, und sie stellt als dehnfähige Klebeschicht einen Puffer gegenüber aufkommenden Spannungsspitzen bei Krafteinleitung dar.

Bei der in Fig. 2 gezeigten Ausführungsform weist die Decklage 5 des Abstandsgewebes 3 eine dünne, flächige Schicht 7 aus dem für die Versteifung der Stegfäden 6 erforderlichen Harz auf. Durch ein randbündiges Zusammenpressen der textilen Decklagen 4, 5 kann in vorteilhafter Weise ein umlaufender Randabschluß erzeugt werden.

Ein solches steifes, flächen- und formstabiles Konstrukt kann in dieser einfachen Ausführung bereits als wärmeisolierende und sicherheitsrelevante Überkopf- oder Fassadenverglasung Anwendung finden, wobei die glasbewerte Seite nach außen zu richten ist.

Die heutigen Kaltfassaden bestehen lediglich aus einer Glasplatte, meist aus Einscheiben-Sicherheitsglas, die hinterlüftet und in einem Mindestabstand von 2 cm vor der eigentlichen Brüstung angebracht sind. Das erfindungsgemäße Glaselement 1 in seiner einfachsten Ausführungsform kann bei geringerem Gewicht eine solche Kaltfassade in eine Warmfassade, also in eine wärmedämmende Fassade mit zusätzlichem Schallschutz überführen.

Von bemerkenswertem ökonomischem Vorteil ist bei dem erfindungsgemäßen Glaselement die Befestigungsmechanik an der Gebäudehaut. Während bisher die Verbindungsriegel an den Glasscheiben über Lochbohrungen oder umgreifende Rahmenelemente befestigt werden mußten, können nun entsprechende Aufnahmevorrichtungen 8 für die Riegel in den innenliegenden Gewebstrukturkörper 3 kraftschlüssig eingebettet werden. Man erhält dann ein Fassadensystem, bei dem die Scheiben ohne außenliegende Befestigungs- und Sicherungselemente und ohne den Scheibenkörper penetrierende Eingriffe flächenbündig in der Art eines architektonisch perfekten Struktural-Glazing die Gebäudehaut bedecken.

Elemente dieser Art, ausgerüstet mit Aufnahmevorrichtungen nach Maßgabe der vorgeschlagenen Befestigungstechnik, sind auch in hervorragender Weise für vorgehängte Fassaden im Sinne transluzenter, wärmedämmender Wandverkleidungen zum Zweck zusätzlicher solarer Erwärmung des Mauerwerks geeignet. Insbesondere bei schlecht gedämmtem Mauerwerk von Altbauten kann über eine Nachrüstung mit solchen vorgehängten Glasbauteilen mit mäßigem Kostenaufwand ein hoher Wärmeenergienutzen für das Gebäude erzielt werden.

In vorteilhafter Weise kann dieses Konstrukt auch dazu dienen, den Wärmedämmwert von bereits mit monolithischen Glasscheiben ausgerüsteten Dach- oder Fassadenflächen zu verbessern. Das Konstrukt ist dann über die Harzschicht 7 mit der Altglasscheibe klebend oder über eine aufgesetzte Rahmenkonstruktion mechanisch zu verbinden.

Fig. 3 zeigt eine weitere Ausführungsform des erfindungsgemäßen Verglasungselements. Bei dieser bevorzugten Ausführungsform sind beide Deckschichten 4, 5 der Abstandsgewebe 3 mit dünnwandigen Glasplatten 2, 9 belegt. Die Randversiegelung kann in der für Isoliergläser üblichen Weise mittels einer Klebeverbindung 10 erfolgen. Abstandhaltende Stegleisten sind nicht mehr erforderlich, da der Scheibenabstand durch das Abstandsgewebe definiert und umlaufend stabil eingehalten wird und jegliche mechanische Wechselbelastungen auf den Versiegelungssteg 10 entfallen.

In vorteilhafter Weise braucht man dann für die Versiegelung keine hochelastischen Dichtstoffe zur Aufnahme der Verformungskräfte der Glasscheiben zu benutzen, sondern kann solche Dichtstoffe verwenden, die optimale Eigenschaften bezüglich Diffusionsdichte, Wärmedämmung und Glashaftung aufweisen.

So kann man dann in empfehlenswerter Weise den Versiegelungssteg auf der dem Innenraum Zugewandten oder abgewandten Seite einschließlich beider Seitenflanken hälftig mit einer dünnen Aluminiumfolie 11 kaschieren, die über die seitlich an den Glasscheiben anliegenden Flächen mittels eines diffusionsdichten Klebers an die Glasscheiben fest anbindet. Vorzugsweise sollte die senkrecht zum Scheibenzwischenraum liegende mittlere Folienfläche faltig ausgebildet sein.

Auch kann bei diesen Elementen in vorteilhafter Weise wieder die frühere Technik der Herstellung des Randverbundes durch direktes Verschweißen der Deckgläser 2, 9 aufgenommen werden, die insbesondere bei evakuierten Isoliergläsern einen diffusionsdichten Randverschluß gewährleistet, allerdings wegen der thermisch bedingten ausbauchenden Verformung der Glasscheiben den dabei auf die Randzonen ausgeübten Kräften nicht standhielt. Eine derartige Ausführungsform mit im Randbereich verschweißten Scheiben 2, 9 ist in Fig. 4 gezeigt.

In vereinfachender Weise kann auch, wie bereits im Zusammenhang mit Fig. 2 erwähnt, eine Randversiegelung über die die Struktur versteifenden Harze Vorgenommen werden. Letztlich kann auf Randversiegelungen gänzlich verzichtet werden, insbesondere dann, wenn eine der Scheiben 2, 9 absorptiv für solare Strahlung ausgebildet wird. Das Scheibenelement 1 wird dann jeweils bei Sonnenlichteinfall erwärmt, so daß eventuell eingedrungene Feuchte im Strukturkörper nicht verbleiben kann.

Als Sonnenschutzglas, mit der Anordnung der absorptiven Scheibe nach außen, erreicht man bei Verzicht auf Randversiegelungen den Vorteil einer geringeren Aufheizung des Scheibenelements durch unmittelbare Abführung der Wärmeenergie der Absorptionsscheibe mittels konvektiver Durchströmung des Strukturgitters des Abstandsgewebes.

Entwicklungsbemühungen an Isolierverglasungen zielen vorrangig auf die Optimierung ihrer Wärmedämmeigenschaften ab. Die Erfindung hatte deshalb neben der mechanischen Stabilisierung auch zum Ziel, die erfindungsgemäßen Verglasungselemente als Isolierglaselemente mit möglichst hohen Wärmedämmleistungen auszustatten.

Bei den vorgeschlagenen Konstrukten mit einliegenden Abstandsgeweben sind bei höheren Scheibenabständen etwa gleiche Wärmedurchgangswerte (k-Werte) wie bei üblichen Isolierglasscheiben gleicher Zwischenraumbreiten zu erreichen. Einer etwaigen Zunahme der Werte über Wärmeleitung aufgrund der Stegfäden steht kompensatorisch der Vorteil geringerer Konvektionsverluste gegenüber.

Die hier zur Anwendung kommenden Abstandsgewebe sind infolge ihrer Biegesteifigkeit und ihrer Druckfestigkeit, insbesondere wenn man sie niederstegig ausbildet, in hervorragender Weise für eine Maßnahme geeignet, die bei Isolierelementen allgemein zu einer erheblichen Steigerung der Widerstandswerte für den Wärmedurchgang führt. Die Evakuierung des Luftvolumens des Plattenzwischenraums zwecks Minimierung der Wärmeleitung wurde vorstehend bereits erwähnt. Bekanntlich reicht dazu bereits ein sehr eng bemessener Plattenabstand von der Größenordnung der freien mittleren Weglänge der Luftmoleküle aus.

Fig. 5 zeigt eine solche Ausführungsform, die sich durch besondere Maßnahmen zur wärmedämmenden Ausrüstung des erfindungsgemäßen Scheibenelements 1 auszeichnet. Um bei einer Evakuierung des Scheibenzwischenraumes die Wärmeleitung über die Stegfäden 6 in sehr engen Grenzen zu halten, wird vorgeschlagen, Abstandsgewebe 3 mit einer Vielzahl möglichst dünner Stegfäden 6, also Stegfäden mit äußerst geringen Feinheitswerten, und mit sparsamster Harzbenetzung zu verwenden.

Besonders bevorzugt sind Abstandsgewebe oder -gewirke, die nach Art eines Velourgewebes gestaltet sind, wobei das hier zur Anwendung kommende Abstandsgewebe aus nur einer Decklage 4 besteht, die mit daraus herausragenden, quer zu der Decklage verlaufenden Stegfäden verbunden ist. Vorzuziehen sind Veloursgewebelagen mit Schlaufen oder aufgeschnittenen Maschen von 1 bis 3 mm Höhe. Die Einzelfäden 6 werden durch die aufgesprühte ausgehärtete Harzbenetzung, die hier nicht dargestellt ist, auf der Glasscheibe 2 versteifend aufgerichtet. Die innenseitig bevorzugt mit einer Low-E-Beschichtung versehene Glasscheibe 9 wird auf diese aufgerichtete Vielzahl der Fäden 6 aufgelegt und nach Vornahme eines luftdichten Randverschlusses mittels eines umlaufenden Klebestegs 10 durch Evakuierung des so gebildeten Scheibenzwischenraums über die gesamte Scheibenfläche fest an die aufliegende Fadenstruktur angepreßt. Die Vielzahl der aufgerichteten, versteiften Fäden verhindert die Einwölbung der Scheiben bei Auflastung des atmosphärischen Überdrucks.

In vorteilhafter Weise kann die Glasplatte 9 innenseitig auch mit einer dünnen Folie 12 ausgerüstet werden, die die versteiften Fadenenden fixierend und krafteinleitend aufnimmt. Um gegebenenfalls die emissionsmindernde Funktion der auf der Glasplatte 9 innenseitig aufliegenden Low-E-Beschichtung zu gewährleisten, muß die Folie 12 aus einem für Wärmestrahlung transparenten Material bestehen. Polyvinylfluorid-Folien unterhalb einer Dicke von 50 μm erfüllen diese Voraussetzung. In gleicher Weise kann auch die faserige Decklage 4, was bei allen dargestellten Ausführungsformen möglich ist, mit einem Harz aus einem für Wärmestrahlung transparenten Material vernetzt werden.

Bezüglich der Stegfäden 6 wird zur Verminderung des Wärmedurchgangs bei jeglicher Art des Abstandsgewebes 3 in vorteilhafter Weise zusätzlich vorgeschlagen, auf mittlerer Höhe der Fadenstege über eine Lange von wenigen Zehntel Millimetern auf Harzüberzüge zu verzichten, um an einem Ort der Fadenlänge, ohne Einbuße für die Biegesteifigkeit und Druckfestigkeit der Fadenstruktur, einen extrem dünnen Fadenquerschnitt zu erreichen. Hinzu tritt der Vorschlag, zur weiteren Minderung der Wärmeleitung Stegfäden mit geringerer Wärmeleitfähigkeit, beispielsweise Kohlenstoff- oder textile Kunststoff-Fasern, oder auch Hohlfasern dieser Faserstoffe vorzusehen.

Durch die vollständige oder wenigstens teilweise Ausbildung der zur Herstellung der textilen Abstandsgewebe verwendeten Glas-, Kunststoff- oder Kohlenstoffasern als Hohlfasern kann der Wärmedurchgang durch das Abstandsgewebe noch weiter verringert werden. Außerdem sind mit Hilfe von Hohlfasern auch ohne zusätzliche Schlichten Lichtleitereffekte erzielbar, oder werden zumindest durch diese begünstigt. Mit Hohlfasern läßt sich ferner eine größere Steifigkeit und Elastizität des Abstandsgewebes erreichen. Dies trägt dazu bei, daß sich die Stegfäden nach der Imprägnierung leichter aufrichten lassen, bzw. sich aus eigener Kraft wieder aufrichten.

Weitere vorgeschlagene Maßnahmen beziehen sich auf eine Verringerung der Wärmedurchgangswerte (k-Werte) durch Vermeidung hoher Wärmestrahlungs-Emissionswerte. Die hohen Emissionswerte von Glasscheibenoberflächen für Wärmestrahlung beruhen auf dem hohen Absorptionsvermögen von Glas für Wärmestrahlung - der Emissionskoeffizient e von Glas beträgt 0,85 - und führen im Raumtemperaturbereich bei Glasscheiben zu einem anteiligen Wärmeenergiedurchgang durch Strahlung von etwa 65 %.

Auf Glasscheiben aufgebrachte emissionsmindernde Schichten (Low-E-Beschichtungen) können daher wesentlich zur Steigerung der Wärmedämmeigenschaften von Isoliergläsern beitragen. Solche Schichten sind allerdings nur dann wirksam, wenn Wärmestrahlen unmittelbar auf sie auftreffen können. An diese Schichten muß daher ein für Wärmestrahlung durchgängiges Medium, beispielsweise eine Luftschicht oder ein für Wärmestrahlung durchgängiges Folienmaterial, angrenzen.

Das bei hochwärmedämmenden Isoliergläsern üblicher Bauart angewandte Konzept, solche Schichten schon allein wegen ihrer Kratzempfindlichkeit auf die dem Innenraum des Isolierglases zugewandten Oberflächen der Glasscheiben aufzubringen, läßt sich für das erfindungsgemäße Verglasungselement nicht unmittelbar übernehmen, da die Innenflächen der Deckgläser an den Harzschichten der Abstandsgewebe anhaften und insofern keine strahlungsoffenen Oberflächen bereitstellen.

Für die Ausstattung von Glasoberflächen mit Low-E-Schichten bedarf es daher bei dem erfindungsgemäßen Verglasungselement eigener Konzepte.

Fig. 6 zeigt eine einfache Ausführungsform eines Verglasungselements mit einer emissionsmindernden Beschichtung. Bei dieser vereinfachten Bauart wird zunächst vorgeschlagen, für die dem Gebäuderaum zugewandte Scheibe 2 eine Glasscheibe mit einer außenseitig pyrolytisch aufgebrachten Low-E-Schicht 13 zu verwenden. Solche pyrolytisch auf Glasscheiben aufgebrachte, die Emission von Wärmestrahlung mindernde Schichten gelten als kratzfest und gegenüber atmosphärischen Belastungen beständig. Die Low-E-Schicht wirkt, wenn sie auf der zum Innenraum des Gebäudes zugewandten Oberfläche der äußeren Deckplatte aufgebracht wird, in diesem Falle als die Wärmestrahlung reflektierende Schicht. Physikalisch gesehen wirken solche Schichten, wenn sie dem Wärmestrom zugewandt werden, bezüglich der Wärmestrahlung reflektierend. Auf Oberflächen angebracht, die dem Wärmestrom abgewandt sind, mindern sie hingegen die Emission von Wärmestrahlung bei effektiv gleichem Nutzen.

Die übliche Anwendung von Low-E-Schichten bei Isolierglaselementen auf einer dem Scheibenzwischenraum zugewandten Scheibenoberfläche kann unter Inanspruchnahme zusätzlicher Verfahrensschritte allerdings auch an den erfindungsgemäßen Scheibenelementen 1 realisiert werden. In diesem Falle wird zunächst das harzgetränkte Abstandsgewebe 3 auf die erste Deckplatte 2 gelegt und in eine Presse geführt, deren obere Anpreßplatte innenseitig als reliefartig geformte Prägeplatte ausgebildet ist. Mittels der Prägeplatte wird in die Harzschicht 7 der oberen Deckgewebelage 5 eine regelmäßig geformte erhabene Linien- oder Punktrasterstruktur geprägt. Die erhabene Linien- oder Punktrasterstruktur soll etwa 10 bis 15 % der Grundfläche ausmachen und diese um mindestens 1 mm überhöhen. Nach Aushärtung der geprägten Rasterstrukturen wird die zweite Deckscheibe 9, innenseitig versehen mit einer Low-E-Beschichtung 13, haftend auf diesen erhabenen Strukturflächen 7 aufgebracht, so daß zwischen der Glasscheibe 9 und den aussparenden Grundflächen der Decklage 5 ein mindestens 1 mm hohes Luftvolumen 14 entstehen kann. Eine gemäß diesen Verfahrensschritten erhaltene Ausführungsform der Erfindung mit innenseitig angeordneter Low-E-Beschichtung ist in Fig. 7 dargestellt. Selbstverständlich können zur Optimierung des k-Wertes bei ein- und demselben Isolierelement pyrolytische Beschichtungen kombiniert mit im Vakuum aufgedampften Beschichtungen Anwendung finden.

Die funktionale Wirksamkeit von innenseitig auf eine bzw. auf beide Deckplatten 2, 9 aufgebrachten Low-E-Beschichtungen kann auch durch eine entsprechende Modifizierung der Decklagen 4, 5 der Abstandsgewirke 3 erreicht werden. Für diesen Fall wird vorzugsweise die Distanz zwischen den Stegreihen erweitert und die verbindenden Decklagen werden auf eine geringere Zahl von Fäden ausgelegt, so daß die den Deckgläsern 2, 9 anhaftenden Decklagen 4, 5 partiell offene Flächen aufweisen und dadurch freie Glasflächen zulassen.

Wie bereits erwähnt, können bei allen Ausführungsformen letztlich für die Benetzung der Deckschichten Harze Verwendung finden, die in dünner Schichtung für das Spektrum der Wärmestrahlung gänzlich oder weitgehend transparent sind. Mit dem erfindungsgemäßen Isolierglaselement kann man bei hoher Evakuierungsrate des Zwischenraums und einer gleichzeitigen Ausstattung des Elements mit Low-E-Schichten außerordentlich hohe Wärmedämmleistungen mit k-Werten von unter $k = 1,0 \text{ W/m}^2\text{K}$ erreichen.

Mit der in Fig. 8 gezeigten Ausführungsform lassen sich noch darüber hinaus gehende Wärmedämmwerte erzielen. Diese Ausführungsform besteht aus einem Verbund zweier Isolierglaselemente, die in einem Abstand von beispielsweise 12 bis 20 mm über eine Randabdichtung 10, analog zu einem üblichen zweischeibigen Isolierglas, miteinander verbunden sind. Die Anbindung der innenliegenden Glasscheiben 15, 16 aneinander kann auch in vorteilhafter Weise durch ein randumlaufend angeordnetes Abstandsgewebe 17 erreicht werden. Bei einem solchen Verbund zweier Isolierglaselemente erhält man die Möglichkeit, erforderliche Low-E-Schichten 13 wie bei normalen Isoliergläsern geschützt auf den dem Zwischenraum zugewandten Oberflächen anzuordnen.

In vorteilhafter Weise können, wie in Fig. 9 gezeigt, an die Stelle der zum Innenraum liegenden Glasscheiben 15, 16 in gewichtssparender Weise transparente Kunststoffplatten bzw. -folien 18 zur Abdeckung der Abstandsgewebe 3 Anwendung finden. Auch hier lassen sich Low-E-Beschichtungen 13 auf der Kunststoffolie 18 geschützt im Scheibenzwischenraum anordnen.

Ferner kann bei einem solchen Verbundelement auf eine Abdeckung der dem Innenraum zugewandten Abstandsgewebe 3 ein- oder beidseitig überhaupt verzichtet werden. Von Vorteil wäre in diesem Fall, wie in Fig. 10 gezeigt, eine in dem Zwischenraum parallel zu den Glasscheiben 2, 9 angeordnete, transparente Glas- oder Kunststoffscheibe bzw. -folie 19, die gegebenenfalls beidseitig mit einer Low-E-Beschichtung 13 versehen werden kann.

Sandwich-Elemente dieser Art lassen sich in vorteilhafter Weise als großflächige, geschoßhohe, transluzente Gebäudehüllflächen anstelle opaker Wandflächen verwenden, wobei bei gleicher Wärmedämmleistung nur Wandstärken von 40 mm anfallen, gegenüber Wandstärken von 400 mm bei üblichen opaken Hüllflächen. Die Stabilität solcher Elemente kann durch einen zusätzlichen Randverbund mittels eines umlaufenden Abstandsgewebebands verstärkt werden. Selbstverständlich ist auch die Ausbildung mehrschichtiger Plattenkörper entsprechend der in Fig. 11 gezeigten Ausführungsform möglich.

Großflächige transluzente Wandelemente können zur Sommerzeit bei erhöhter Solareinstrahlung zu einer übermäßigen Raumaufheizung führen, während in der Winterperiode und in den Übergangszeiten eine hohe solare Einstrahlung zur Raumaufheizung beiträgt. Wird bei solchen Elementen eine der Außenscheiben durch eine absorptive Glasscheibe mit vorwiegend absorptiver Wirkung im nichtsichtbaren langwelligen Bereich des solaren Strahlungsspektrums ersetzt, so verhilft dieses so ausgestattete Isolierglaselement je nach Wendung um 180 ° im Sommer zu einem hochwirksamen Sonnenschutz, im Winter jedoch zu einer vollen Wärmeenergienutzung der solaren Einstrahlung für die Raumerwärmung.

Bei Sommer-Positionierung des Elements, mit der absorptiven Außenscheibe zur Sonne zugewandt, wird selektiv mindestens 50 % der solaren Energiestrahlung, vorwiegend die des langwelligen nichtsichtbaren Spektralbereichs, von der außenseitig liegenden absorptiven Filterscheibe in Wärmeenergie umgewandelt. Infolge des hohen Wärmewiderstands des Isolierscheibenelements und der auf der rückwärtigen Oberfläche der nach außen gerichteten absorptiven Filterscheibe aufgebrachten Low-E-Beschichtung wird die Wärmeenergie überwiegend an die Außenatmosphäre konvektiv oder in Form von Wärmestrahlung abgeführt.

Bei Winterpositionierung des Elements verläuft dieser Effekt, analog der Wirkung einer Diode, in entgegengesetzter Richtung. Bei Wendung des Isolierscheibenelements um 180 ° ist die absorptive Filterscheibe nunmehr raumseitig angeordnet. Die auf das Wandelement auftreffende Sonnenstrahlung durchdringt das transluzente Isolierglaselement mit geringen Transmissionsverlustquoten und trifft auf die nunmehr dem Innenraum des Gebäudes zugewandte absorptive Filterglasscheibe. Die durch Absorption der solaren Strahlung in dieser Scheibe erzeugten Wärme fließt nahezu vollständig dem Innenraum zu.

Eine Steuerung der Sonneneinstrahlung kann selbstverständlich in der gewohnten Weise auch über Jalousien erfolgen, die hier in vorteilhafter Weise geschützt im freien Raum zwischen den zusammengesetzten Elementen untergebracht werden können.

Ein augenfälliger Vorteil der bisher vorgestellten erfindungsgemäßen Verglasungselemente ist das geringe Eigengewicht der Konstrukte, die selbst mit einer einzelnen Glasplatte realisiert werden können. Die erfindungsgemäßen Glaselemente gestatten infolge ihres geringen Eigengewichts große Spannweiten ohne Sonderlich verfestigte Randauflagen.

Bei der in Fig. 12 dargestellten Ausführungsform wird die im Unterschied zu anderen Glasverbundelementen vorhandene Möglichkeit genutzt, die erfindungsgemäßen Verglasungselemente ohne Eingriff in die bruchanfälligen Scheibenkörper mit hoher Tragkraft sicher zu befestigen. Zu diesem Zweck ist bei dieser Ausführungsform das an der Scheibe 2 anhaftende Abstandsgewebe 3 randseitig über die Scheibenkanten hinausgeführt und kann als Borde mit entsprechenden Haltevorrichtungen ausgestattet werden.

Eine solche überstehende Borde des Abstandsgewebes 3 kann verpreßt oder als Band in beliebiger Weise an Halteleisten durch Verklebung, Verschraubung oder Verklemmung befestigt werden.

Glassandwichelemente dieser Art mit randüberstehenden Borden als Halte- bzw. Befestigungsvorrichtung können insbesondere im Bereich der Fassadenverglasung und der Wandverkleidung in vorteilhafter Weise Anwendung finden. Eine Verfestigung der Glasplatten über vierseitig überstehende Borden des Abstandsgewebes an Trageelementen der Bauhülle ermöglicht eine belastungssichere, elastische Anbindung von großflächigen Glaselementen. Die üblicherweise durch die starre Verfestigung der Scheibenkörper an den Trageelementen entstehenden Verspannungen und Verwerfungen, die optisch im Fassadenbild als störend empfunden werden, können bei dieser Art der Befestigung vermieden werden.

Mittels überstehender Borden des Abstandsgewebes können großflächige Scheiben nicht nur spannungsfrei an ins Mauerwerk eingelassenen Trageelementen aufgehängt werden, sondern können auch über seitlich hinausstehende Borden streifenförmig miteinander flächengleich verbunden werden. In vorteilhafter Weise können dabei die einzelnen Glasplatten analog von Holzpaneelen jeweils in der Art von Nut und Feder ausgebildet werden.

Von besonderem Nutzen ist die Verwendung dieser wärmedämmenden, transluzenten Sicherheitsglaselemente, in gewichts- und kostensparender Weise mit nur einseitiger Glasdeckschicht ausgeführt, als dem Mauerwerk vorgehängte Dämmfassade zur außenseitigen Aufwärmung des Mauerwerks durch die Sonnenstrahlung. Zur Sommerzeit kann die Wärmeeinwirkung auf das Mauerwerk durch Abgünstung der Warmluft über den durch ein entsprechend lichtes Abstandsgewebe gebildeten Luftschacht begrenzt werden. Der gleiche Luftschacht bietet sich für die Abführung der vom Mauerwerk abgegebenen Feuchte an.

Selbst bei Verwendung von vorgespannten Gläsern oder von Verbundsicherheitsgläsern, die anstelle von Float- oder Gußglasscheiben für zusätzlichen Verletzungsschutz bei allen Ausführungs- und Anwendungsformen der erfindungsgemäßen Glaselemente selbstverständlich zur Anwendung gelangen können, sind solche, sowohl wärmedämmenden wie auch solare Strahlungsgewinne nutzenden Glasvorhangfassaden zu geringeren Kosten zu realisieren, verglichen mit den heute üblichen, dem Mauerwerk vorgehängten Fassaden aus opaken Dämmaterialien.

Die erfindungsgemäßen Verglasungselemente sind infolge der Abstandsgewebe transluzent. Die hindurchtretende Sonnenstrahlung fällt als diffus gestreute Lichtstrahlung in den Raum ein. Diffus gestreute solare Lichteinstrahlung verhilft zu einer höheren Raumausleuchtung bei verminderter Blendung. Durch dichtere Decklagen der Abstandsgewebe können diese Effekte entsprechend verstärkt werden.

Um die Lichteinfallrate und somit gleichsam den einfallenden solaren Energiefluß zu erhöhen, wird in diesem Zusammenhang vorgeschlagen, die Stegfäden analog Lichtleitfasern auszubilden, nämlich die Filamente, aus denen sich die Fäden zusammensetzen mit optisch höher brechenden Schichten zu versehen.

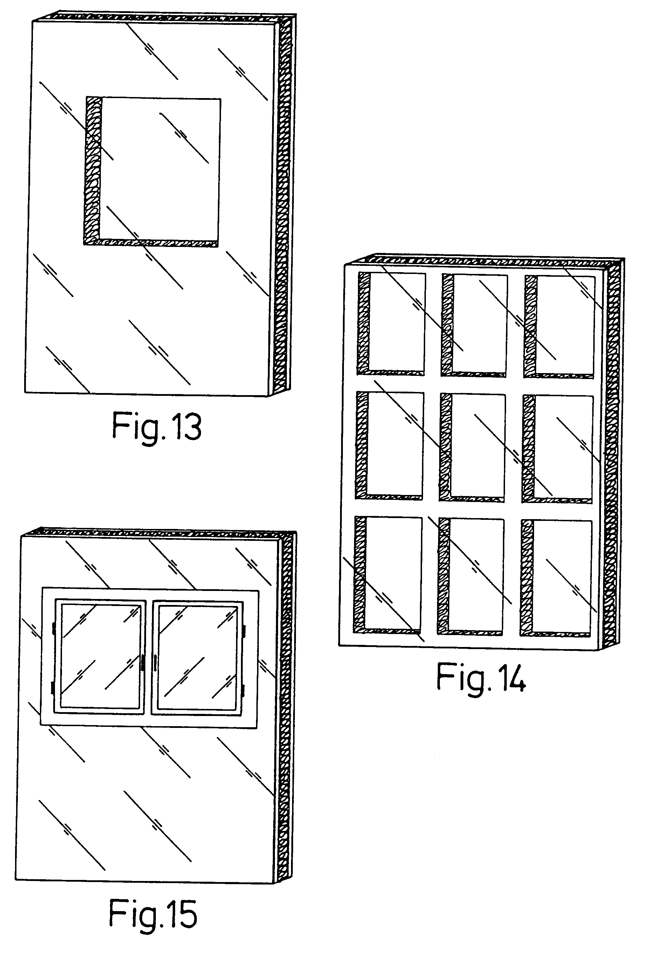

Bei den in den Figuren 13 und 14 gezeigten Ausführungsformen ist vorgesehen, innerhalb der Wandelemente durch entsprechende Aussparungen in den Abstandsgeweben partiell transparente Flächen auszubilden. Aus der Vielzahl von Möglichkeiten der flächenhaften Anordnung von transparenten Bereichen ist die in Fig. 14 gezeigte Gestaltung eines vollständig transparenten Isolierglasscheibenelements hervorzuheben, bei der lediglich die im Scheibenzwischenraum eingelegten Kunststoff- oder Aluminiumstege, die üblicherweise dem Fenster ein konservatives Aussehen im Stil eines aus Einzelscheiben zusammengesetzten Fensters verleihen sollen, durch in entsprechender Breite eingelegte Bänder aus Abstandsgewirken ersetzt werden. Die tragende Idee der Erfindung, nämlich Glasscheiben unter Verwendung von Abstandsgewirken zu form- und kraftschlüssigen, biegesteifen Flachkörpern mit wärmedämmenden Eigenschaften zu verbinden, bleibt gewahrt. Zum einen verhindert diese Verfestigung das Aus- und Einwölben der Scheiben bei thermisch bedingtem steigendem oder fallendem Innendruck und die Auswirkungen der Auswölbung auf den Randverbund. Zum anderen können mit Hilfe der kraftübertragenden Stege höhere Windlasten aufgenommen werden, da beide Scheiben an der Lastaufnahme beteiligt werden. Insofern ist eine geringere Dimensionierung der Scheibendicken möglich.

Durch die kraftschlüssige Ankoppelung der Scheiben an die elastischen Stege wird nicht zuletzt auch das Schalldämmvermögen des Elements begünstigt. Gegenüber üblicherweise verwendeten Aluminiumstegen wird zudem das Wärmedämmvermögen und der Lichtdurchgang des Isolierglaselements infolge der Transluzenz der Stege erhöht.

Bei den bisherigen zweischeibigen Isolierglaselementen war die umlaufende und dichtende Randverklebung selbst bei geringen Flächenmaßen nicht imstande, die durch die Schwerkraft der Scheiben bedingten Scherkräfte aufzunehmen. Hierzu war bisher eine Verrahmung erforderlich. Die flächenhaft strukturierte Verfestigung der Deckscheiben infolge der integrierten Zwischenstege verleiht der erfindungsgemäßen Isolierglasscheibe Formstabilität, so daß sie ohne zusätzliche Rahmung als monolithisches Element Anwendung finden kann.

Schließlich läßt sich ein solches formstabiles, transluzentes, also die solare Strahlung durchlassendes Element auch mit partiellen Aussparungen, sowohl des Abstandsgewebes als auch der beidseitig aufliegenden transparenten Deckplatten herstellen, in die man Blendflügelrahmungen zur Aufnahme von Fensterflügeln in beliebiger Form als Dreh-, Kipp- oder Wendeflügel integrieren kann. Ein solches Element, daß man vorzugsweise als geschoßhohes Wandelement mit einer hier nicht abgebildeten Wendemechanik ausbilden kann, wobei eine der Deckscheiben von der Art einer selektiv, absorptiven Filterscheibe sein soll, wird in Fig. 15 dargestellt. Von Vorteil bei diesem Konstrukt ist die Nutzung des gesamten geschoßhohen Scheibenelements als Sonnenschutzglas in Sommerposition und als hocheffizienter Solarkollektor in Winterposition ohne zusätzliche Drehmechanik des integrierten Fensterelements.

Für Überkopfverglasungen werden bei vielen Anwendungen Brandschutzgläser eingesetzt. Um die erfindungsgemäßen Verglasungselemente mit Brandschutzeigenschaften auszustatten, wird vorzugsweise der zwischen den Stegfäden verbleibende Scheibenzwischenraum mit einem Brandschutzmaterial gefüllt. Als Brandschutzmaterial wird in an sich bekannter Weise ein glasklares Gel aus einem Polymer, in das eine hoch wasserhaltige, anorganische Salzlösung eingebettet ist, verwendet. Im Brandfalle bildet sich aus diesem Material eine hoch wärmedämmende Isolierschicht. Dabei wird durch Verdampfung des eingelagerten Wassers Energie verzehrt.

**Patentansprüche**

1. Verglasungselement (1) mit wenigstens einer Scheibe (2) und einer an einer der Deckflächen der Scheibe angeordneten, sich zumindest über einen wesentlichen Teil ihrer Flächenausdehnung erstreckenden Schicht aus parallel zu den Deckflächen der Scheibe (2) verlaufenden Fasern, dadurch gekennzeichnet, daß diese Faserschicht von einer ersten Decklage (4) eines mit Harz imprägnierten Abstandsgewebes oder -gewirks (3) gebildet und mit der Deckfläche der Scheibe kraftschlüssig verbunden ist, wobei das Abstandsgewebe oder -gewirk mindestens eine zweite, der ersten Decklage (4) gegenüberliegende Decklage (5) aufweist und die Decklagen (4, 5) durch quer zu denselben verlaufende, nach dem Aushärten des Harzes elastische und biegesteife Stegfäden (6) miteinander verbunden sind.

2. Verglasungselement nach Anspruch 1, dadurch gekennzeichnet, daß die Stegfäden (6) einander kreuzen.

3. Verglasungselement nach Anspruch 2, dadurch gekennzeichnet, daß zumindest ein wesentlicher Anteil der einander kreuzenden Stegfäden (6) an den Kreuzungsstellen miteinander verbunden sind.

4. Verglasungselement nach einem der vorhergehenden Ansprüche, dadurch gekennzeichnet, daß das Abstandsgewebe (3) aus Glas-, Kunststoff- oder Kohlenstoffasern oder aus deren Mischungen zusammengesetzt ist.

5. Verglasungselement nach Anspruch 4, dadurch gekennzeichnet, daß die Stegfäden (6) aus Glasfasern bestehen, die mit Silanschlichten versehen sind.

6. Verglasungselement nach Anspruch 4 oder 5, dadurch gekennzeichnet, daß die Glas-, Kunststoff- oder Kohlenstoffasern wenigstens teilweise aus Hohlfasern gebildet sind.

7. Verglasungselement nach einem der vorhergehenden Ansprüche, dadurch gekennzeichnet, daß das Harz aus der Gruppe bestehend aus Epoxid-, Polyurethan-, Phenol- oder Polyesterharz oder deren Mischungen ausgewählt ist.

8. Verglasungselement nach einem der vorhergehenden Ansprüche, dadurch gekennzeichnet, daß die Decklagen (4, 5) des Abstandsgewebes oder -gewirks (3) im Randbereich umlaufend zusammengepreßt sind.

9. Verglasungselement nach einem der vorhergehenden Ansprüche, dadurch gekennzeichnet, daß Befestigungselemente (8) in das Abstandsgewebe oder -gewirk (3) kraftschlüssig eingebettet sind.

10. Verglasungselement nach einem der vorhergehenden Ansprüche, dadurch gekennzeichnet, daß das Abstandsgewebe oder -gewirk (3) über den Rand der Scheibe (2) hinaus verlängert ist.

11. Verglasungselement nach einem der vorhergehenden Ansprüche, dadurch gekennzeichnet, daß wenigstens eine weitere Scheibe (9) parallel zu der Scheibe (2) und das Abstandsgewebe (3) im Scheibenzwischenraum angeordnet ist.

12. Verglasungselement nach Anspruch 11, dadurch gekennzeichnet, daß die zweite Decklage (5) des Abstandsgewebes oder -gewirks (3) mit der weiteren Scheibe (9) kraftschlüssig verbunden ist.

13. Verglasungselement nach einem der vorhergehenden Ansprüche, dadurch gekennzeichnet, daß die Decklagen (4, 5) des Abstandsgewebes oder -gewirks (3) mit der Scheibe (2) oder den Scheiben (2, 9) über eine Klebefolie verbunden sind.

14. Verglasungselement nach Anspruch 13, dadurch gekennzeichnet, daß die Klebefolie aus Polyvinylbutyral oder Polyurethan gebildet ist.

15. Verglasungselement nach Anspruch 13 oder 14, dadurch gekennzeichnet, daß in die Klebefolie Glas-, Kunststoff- oder Kohlenstoff-Fasern integriert sind.

16. Verglasungselement nach einem der vorhergehenden Ansprüche, dadurch gekennzeichnet, daß die Stegfäden (6) mit Materialien beschichtet sind, deren Brechungsindex größer ist als der des Materials, aus dem die Stegfäden bestehen.

17. Verglasungselement mit wenigstens zwei parallel angeordneten, lichtdurchlässigen Scheiben (2, 9) und einer mit einer der Deckflächen der ersten Scheibe (2) verbundenen Faserschicht aus parallel zu den Deckflächen dieser Scheibe verlaufenden Fasern, dadurch gekennzeichnet, daß die Faserschicht von der Decklage (4) eines mit Harz Imprägnierten textilen Abstands gewebes oder -gewirks (3) gebildet ist, das aus dieser Decklage und daraus herausragenden quer zu der Decklage verlaufenden Stegfäden (6) besteht, deren freie Enden an der zweiten Scheibe (9) angeordnet sind.

18. Verglasungselement nach Anspruch 17, dadurch gekennzeichnet, daß die Stegfäden (6) über eine Zwischenschicht (12) an der zweiten Scheibe (9) fixiert sind.

19. Verglasungselement nach Anspruch 18, dadurch gekennzeichnet, daß die Zwischenschicht (12) aus einer Harzschicht oder einer Klebefolie gebildet ist.

20. Verglasungselement nach Anspruch 18, dadurch gekennzeichnet, daß die Zwischenschicht (12) aus einem für Wärmestrahlung durchgängigen Material gebildet ist.

21. Verglasungselement nach einem der Ansprüche 11 bis 20, dadurch gekennzeichnet, daß außenseitig zum Abstandsgewebe (3) eine diffusionsdichte Randabdichtung (10) vorgesehen ist.

22. Verglasungselement nach Anspruch 21, dadurch gekennzeichnet, daß die diffusionsdichte Randabdichtung (10) durch direktes Verschweißen der Scheiben gebildet ist.

23. Verglasungselement nach einem der Ansprüche 11 bis 22, dadurch gekennzeichnet, daß der Scheibenzwischenraum mindestens teilweise evakuiert ist.

24. Verglasungselement nach einem der Ansprüche 11 bis 22, dadurch gekennzeichnet, daß der Scheibenzwischenraum mit einem wärmedämmenden Material gefüllt ist.

25. Verglasungselement nach Anspruch 24, dadurch gekennzeichnet, daß das wärmedämmende Material ein Gas ist.

26. Verglasungselement nach einem der Ansprüche 11 bis 22, dadurch gekennzeichnet, daß der Scheibenzwischenraum mit einem Brandschutzmaterial gefüllt ist.

27. Verglasungselement nach Anspruch 26, dadurch gekennzeichnet, daß das Brandschutzmaterial durch ein glasklares Gel aus einem Polymer, worin eine hoch wasserhaltige, anorganische Salzlösung eingebettet ist, gebildet ist.

28. Verglasungselement nach einem der vorhergehenden Ansprüche, dadurch gekennzeichnet, daß sich etwa auf mittlerer Höhe der Stegfäden (6) kein Harzauftrag befindet.

29. Verglasungselement nach einem der vorhergehenden Ansprüche, dadurch gekennzeichnet, daß eine der Scheiben (2, 9) strahlungsabsorbierend ausgebildet ist.

30. Verglasungselement nach einem der vorhergehenden Ansprüche, dadurch gekennzeichnet, daß eine Low-E-Beschichtung (13) auf mindestens einer der Scheiben (2, 9) aufgebracht ist.

31. Verglasungselement nach Anspruch 30, dadurch gekennzeichnet, daß die Low-E-Beschichtung (13) pyrolytisch auf der Außenseite einer der Scheiben (2, 9) aufgebracht ist.

32. Verglasungselement nach Anspruch 30, dadurch gekennzeichnet, daß die Low-E-Beschichtung (13) im Scheibenzwischenraum angeordnet ist und mindestens teilweise an ein für Wärmestrahlung durchlässiges Gasmedium oder Folienmaterial (18) grenzt.

33. Verglasungselement nach einem der Ansprüche 11 bis 32, dadurch gekennzeichnet, daß das Verglasungselement (1) um 180° wendbar angeordnet ist.

34. Verglasungselement nach einem der Ansprüche 11 bis 33, dadurch gekennzeichnet, daß mindestens eine weitere Scheibe (15, 16) im Scheibenzwischenraum angeordnet ist.

35. Verglasungselement nach Anspruch 34, dadurch gekennzeichnet, daß die im Scheibenzwischenraum angeordneten Scheiben (15, 16) jeweils durch ein Abstandsgewebe oder -gewirk (3) kraftschlüssig mit mindestens einer der außenliegenden Scheiben (2, 9) verbunden sind.

36. Verglasungselement nach einem der Ansprüche 34 oder 35, dadurch gekennzeichnet, daß die im Scheibenzwischenraum angeordnete Scheibe von einer Kunststoffplatte oder -folie (19) gebildet ist.

37. Verglasungselement nach einem der Ansprüche 34 bis 36, dadurch gekennzeichnet, daß die im Scheibenzwischenraum angeordnete Scheibe (15, 16; 19) auf wenigstens einer ihrer Flächen eine Low-E-Beschichtung (13) aufweist.

38. Verglasungselement nach einem der vorhergehenden Ansprüche, dadurch gekennzeichnet, daß im Abstandsgewebe (3) Aussparungen zur Ausbildung partiell transparenter Flächen vorgesehen sind.

39. Verglasungselement nach Anspruch 38, dadurch gekennzeichnet, daß das Abstandsgewebe (3) aus linien- oder rasterförmig angeordneten Bändern gebildet ist.

40. Verglasungselement nach einem der vorhergehenden Ansprüche, gekennzeichnet durch seine Verwendung als wärmedämmendes Sicherheitsglas, insbesondere für Dach- oder Überkopfverglasungen, Fassadenverkleidungen oder Türelemente, als einbruchhemmendes Glas oder als Schallschutzglas.

41. Verfahren zur Herstellung eines Verglasungselements gemäß Anspruch 1, dadurch gekennzeichnet, daß auf die Deckfläche einer lichtdurchlässigen Scheibe oder Platte (2) ein mit Harz imprägniertes Abstandsgewebe (3) aus wenigstens zwei Decklagen (4, 5) und quer zu den Decklagen verlaufenden Stegfäden (6) flächig aufgelegt und der entstehende Schichtkörper in einer Preßform zusammengedrückt wird, so daß die Scheibe (2) an eine der Decklagen (4, 5) des Gewebes (3) klebend anbindet, wonach die Preßform geöffnet und das Harz ausgehärtet wird.

42. Verfahren nach Anspruch 41, dadurch gekennzeichnet, daß vor dem Pressen eine zweite Scheibe oder Platte (9) auf den Schichtkörper aufgelegt wird.

43. Verfahren nach einem der Ansprüche 41 oder 42, dadurch gekennzeichnet, daß die Preßform kalibrierend geöffnet wird, bis der gewünschte Abstand zwischen den Decklagen (4, 5) erreicht ist.

44. Verfahren zur Herstellung eines Verglasungselements gemäß Anspruch 11, dadurch gekennzeichnet, daß ein wenigstens teilweise mit Harz imprägniertes Abstandsgewebe (3) aus mindestens zwei Decklagen (4, 5) und quer zu den Decklagen verlaufenden Stegfäden (6) ausgehärtet wird und anschließend in abstandsgebender Weise zwischen wenigstens zwei Scheiben oder Platten (2, 9) eingelegt und klebend verpreßt wird.

45. Verfahren nach Anspruch 44, dadurch gekennzeichnet, daß die Decklagen (4, 5) des Abstandsgewebes (3) mit einer Klebefolie versehen werden.

46. Verfahren nach einem der Ansprüche 41 bis 44, dadurch gekennzeichnet, daß die Harzbeschichtung der Decklagen (4, 5) des Abstandsgewebes (3) vor der Harzbeschichtung der Stegfäden (6) und/oder der Randzone der Decklagen ausgehärtet wird.

47. Verfahren zur Herstellung eines Verglasungselements gemäß Anspruch 17, gekennzeichnet durch die folgenden Schritte:

a) ein mit Harz imprägniertes Abstandsgewebe (3) bestehend aus einer Decklage (4) und aus der Decklage herausragenden Stegfäden wird mit einer ersten Scheibe klebend verpreßt;

b) das Harz wird ausgehärtet und die Stegfäden (6) versteifend aufgerichtet;

c) eine zweite Scheibe (9) wird auf die freien Enden der Stegfäden (6) aufgelegt; und

d) der Plattenkörper wird mit einer umlaufenden Randabdichtung (10) versehen und mindestens teilweise evakuiert.

**Claims**

1. A glazing element (1) comprising at least one pane (2) and a coating which is provided on one of the covering surfaces of the pane and extends at least over a substantial part of the extent of the area thereof, composed of fibers extending in parallelism to the covering surfaces of the pane (2), characterized in that such fiber coating is constituted by a first covering layer (4) of a spacer fabric or knit (3) impregnated with resin and is connected in a force transmitting manner with the covering surface of the pane, the spacer fabric or knit possessing at least one second covering layer (5) opposite to the first covering layer (4) and the covering layers (4, 5) being connected together by rib fibers (6) which extend transversely in relation to the covering layers (4, 5) and, after curing of the resin, are elastic and flexurally stiff.

2. The glazing element as claimed in claim 1, characterized in that the rib fibers (6) intersect with one another.

3. The glazing element as claimed in claim 2, characterized in that at least a substantial portion of the intersecting rib fibers (6) is connected at the points of intersection.

4. The glazing element as claimed in any one of the preceding claims, characterized in that the spacer fabric (3) is composed of glass, synthetic resin or carbon fibers or mixtures thereof.

5. The glazing element as claimed in claim 4, characterized in that the rib fibers (6) comprise glass fibers, which are provided with silane sizes.

6. The glazing element as claimed in claim 4 or in claim 5, characterized in that the glass, synthetic resin or carbon fibers are constituted at least partly of hollow fibers.

7. The glazing element as claimed in any one of the preceding claims, characterized in that said resin is selected from the group consisting of epoxy, polyurethane, phenol or polyester resins or mixtures thereof.

8. The glazing element as claimed in any one of the preceding claims, characterized in that the covering layers (4, 5) of the spacer fabric or knit (3) are pressed together in the edge region in a surrounding manner.

9. The glazing element as claimed in any one of the preceding claims, characterized in that attachment elements (8) are embedded in the spacer fabric or knit (3) in a force transmitting manner.

10. The glazing element as claimed in any one of the preceding claims, characterized in that the spacer fabric or knit (3) is extended past the edge of the pane (2).

11. The glazing element as claimed in any one of the preceding claims, characterized in that at least one further pane (9) is arranged in parallelism to the pane (2) and the spacer fabric (3) is arranged in the intermediate space between the panes.

12. The glazing element as claimed in claim 11, characterized in that the second covering layer (5) of the spacer fabric or knit (3) is connected with the further pane (9) in a force transmitting manner.

13. The glazing element as claimed in any one of the preceding claims, characterized in that the covering layers (4, 5) of the spacer fabric or knit (3) are connected with the pane (2) or the panes (2, 9) by means of an adhesive film.

14. The glazing element as claimed in claim 13, characterized in that the adhesive film is constituted by polyvinylbutyral or polyurethane.

15. The glazing element as claimed in claim 13 or in claim 14, characterized in that glass, synthetic resin or carbon fibers are integrated in the adhesive film.

16. The glazing element as claimed in any one of the preceding claims, characterized in that the rib fibers (6) are coated with materials whose index of refraction is greater than that of the material of which the rib fibers consist.

17. A glazing element comprising at least two transparent panes (2, 9) arranged in parallelism to each other and a fiber coating which is connected with one of the covering surfaces of the first pane (2) and is made up of fibers extending in parallelism to the covering surfaces of said pane, characterized in that the fiber coating is constituted by the covering layer (4) of a resin impregnated textile spacer fabric or knit (3) which comprises said covering layer and rib fibers (6) extending transversely in relation to the covering layer and protruding therefrom, the free ends of the rib fibers (6) being arranged at the second pane (9).

18. The glazing element as claimed in claim 17, characterized in that the rib fibers (6) are secured on the second pane (9) by means of an intermediate coating (12).

19. The glazing element as claimed in claim 18, characterized in that the intermediate coating (12) is constituted by a resin coating or an adhesive film.

20. The glazing element as claimed in claim 18, characterized in that the intermediate coating (12) is constituted by a material allowing the passage of thermal radiation.

21. The glazing element as claimed in any one of the claims 11 to 20, characterized in that to the outside of the spacer fabric (3) a diffusion-tight edge seal (10) is provided.

22. The glazing element as claimed in claim 21, characterized in that the diffusion-tight edge seal (10) is formed by direct welding of the panes.

23. The glazing element as claimed in any one of the claims 11 to 22, characterized in that the intermediate space between the panes is at least partly evacuated.

24. The glazing element as claimed in any one of the claims 11 to 22, characterized in that the intermediate space between the panes is filled with a thermally insulating material.

25. The glazing element as claimed in claim 24, characterized in that the thermally insulating material is a gas.

26. The glazing element as claimed in any one of the claims 11 to 22, characterized in that the intermediate space between the panes is filled with a fireproof material.

27. The glazing element as claimed in claim 26, characterized in that the fireproof material is constituted by a transparent gel of a polymer which has a highly hydrous, inorganic saline solution embedded therein.

28. The glazing element as claimed in any one of the preceding claims, characterized in that approximately half way up the rib fibers (6) the same are free of resin coating.

29. The glazing element as claimed in any one of the preceding claims, characterized in that one of the panes (2, 9) is designed to absorb radiation.

30. The glazing element as claimed in any one of the preceding claims, characterized in that a low E coating (13) is applied to at least one of the panes (2, 9).

31. The glazing element as claimed in claim 30, characterized in that the low E coating (13) is applied pyrolytically to the outer side of one of the panes (2, 9).

32. The glazing element as claimed in claim 30, characterized in that the low E coating (13) is provided in the intermediate space between the panes and at least partly adjoins a gaseous medium or film material (18) transparent to thermal radiation.

33. The glazing element as claimed in any one of the claims 11 to 32, characterized in that the glazing element (1) is arranged so that it may be turned through 180°.

34. The glazing element as claimed in any one of the claims 11 to 33, characterized in that at least one further pane (15, 16) is arranged in the intermediate space between the panes.

35. The glazing element as claimed in claim 34, characterized in that the panes (15, 16) arranged in the intermediate space between the panes are respectively connected with at least one of the outer panes (2, 9) by a spacer fabric or knit (3) in a force transmitting manner.

36. The glazing element as claimed in claim 34 or in claim 35, characterized in that the pane arranged in the intermediate space between the panes is constituted by a synthetic resin sheet or film (19).

37. The glazing element as claimed in any one of the claims 34 to 36, characterized in that the pane (15, 16; 19) arranged in the intermediate space between the panes has a low E coating (13) on at least one of its surfaces.

38. The glazing element as claimed in any one of the preceding claims, characterized in that recesses are provided in the spacer fabric (3) in order to constitute partly transparent areas.

39. The glazing element as claimed in claim 38, characterized in that the spacer fabric (3) is constituted by bands arranged linearly or in grids.

40. The glazing element as claimed in any one of the preceding claims, characterized by the use thereof as a thermal insulating safety glass, more particularly for roof or overhead glazing arrangements, facade cladding or door elements, as a glass proof against breaking in or out or as acoustic insulating glass.

41. A method for the production of a glazing element as claimed in claim 1, characterized in that on the covering surface of a transparent pane or sheet (2) a resin impregnated spacer fabric (3) of at least two covering layers (4, 5) and rib fibers (6) extending transversely in relation to the covering layers is placed to cover the area thereof, and the resulting laminated body is compressed in a pressing mold so that the pane (2) is adhesively bonded to one of the covering layers (4, 5) of the fabric (3), whereafter the pressing mold is opened and the resin is cured.

42. The method as claimed in claim 41, characterized in that prior to pressing a second pane or sheet (9) is placed on the laminated body.

43. The method as claimed in claim 41 or in claim 42, characterized in that the pressing mold is opened a graduated amount until the desired distance is reached between the covering layers (4, 5).

44. A method for the production of a glazing element as claimed in claim 11, characterized in that an at least partly resin impregnated spacer fabric (3) of at least two covering layers (4, 5) and rib fibers (6) extending transversely in relation to the covering layers is cured and then is placed between two panes or sheets (2, 9) in a distance determining manner and is pressed with an adhesive bonding effect.

45. The method as claimed in claim 44, characterized in that the covering layers (4, 5) of the spacer fabric (3) are provided with an adhesive film.

46. The method as claimed in any one of the claims 41 to 44, characterized in that the resin coating of the covering layers (4, 5) of the spacer fabric (3) is cured prior to resin coating of the rib fibers (6) and/or the edge zone of the covering layers.

47. A method for the production of a glazing element as claimed in claim 17, characterized by the following steps:

a) pressing a resin impregnated spacer fabric (3) comprising a covering layer (4) and rib fibers extending from the covering layer with a first pane in a bonding manner;

b) curing the resin and erecting the rib fibers (6) in a rigid form;

c) laying a second pane (9) on the free ends of the rib fibers (6); and

d) providing the pane structure with a surrounding edge seal (10) and at least partly evacuating the same.

## Revendications

1. Elément de vitrage (1) avec au moins un panneau (2) et une couche disposée sur l'une des faces de couverture du panneau, s'étendant au moins sur une partie notable de son étendue de surface, constituée de fibres s'étendant parallèlement aux faces de couverture du panneau (2), caractérisé en ce que cette couche de fibres est constituée par une première couche de couverture (4) d'un tissu ou d'un tricot d'espacement (3) imprégné d'une résine et reliée à la couverture du panneau par interaction de forces, le tissu ou le tricot d'espacement présentant au moins une deuxième couche de couverture (5) opposée à la première couche de couverture (4), et les couches de couverture (4, 5) étant reliées ensemble au moyen de fils d'âme (6) élastiques et résistant à la flexion, après le durcissement de la résine, s'étendant transversalement par rapport à ces mêmes couches.

2. Elément de vitrage selon la revendication 1, caractérisé en ce que les fils d'âme (6) se croisent les uns les autres.

3. Elément de vitrage selon la revendication 2, caractérisé en ce qu'au moins une part notable des fils d'âme (6), se croisant les uns les autres, sont reliés ensemble aux points de croisement.

4. Elément de vitrage selon l'une des revendications précédentes, caractérisé en ce que le tissu d'espacement (3) est constitué de fibres de verre, matière synthétique ou carbone, ou bien de leurs mélanges.

5. Elément de vitrage selon la revendication 4, caractérisé en ce que les fils d'âme (6) sont constitués de fibres de verre dotées d'un encollage au silane.

6. Elément de vitrage selon la revendication 4 ou 5, caractérisé en ce que les fibres en verre, en matière synthétique ou en carbone sont constituées au moins partiellement de fibres creuses.

7. Elément de vitrage selon l'une des revendications précédentes, caractérisé en ce que la résine est sélectionnée dans le groupe constitué de la résine époxide, polyuréthanne, phénolique ou polyester, ou bien de leurs mélanges.

8. Elément de vitrage selon l'une des revendications précédentes, caractérisé en ce que les couches de couverture (4, 5) du tissu ou du tricot d'espacement (3) sont comprimées ensemble en pourtour dans la zone de bordure.

9. Elément de vitrage selon l'une des revendications précédentes, caractérisé en ce que des éléments de fixation (8) sont noyés par interaction de forces dans le tissu ou le tricot d'espacement (3).

10. Elément de vitrage selon l'une des revendications précédentes, caractérisé en ce que le tissu ou le tricot d'espacement (3) est prolongé au-delà du bord du panneau (2).

11. Elément de vitrage selon l'une des revendications précédentes, caractérisé en ce qu'au moins un autre panneau (9) est disposé, parallèlement au panneau (2) et au tissu d'espacement (3), dans l'espace intermédiaire entre panneaux.

12. Elément de vitrage selon la revendication 11, caractérisé en ce que la deuxième couche de couverture (5) du tissu ou du tricot d'espacement (3) est reliée par interaction de forces à l'autre panneau (9).

13. Elément de vitrage selon l'une des revendications précédentes, caractérisé en ce que les couches de couverture (4, 5) du tissu ou du tricot d'espacement (3) sont reliées au panneau (2) ou aux panneaux (2, 9) par l'intermédiaire d'une feuille adhésive.

14. Elément de vitrage selon la revendication 13, caractérisé en ce que la feuille adhésive est constituée de polyvinylbutyral ou polyuréthanne.

15. Elément de vitrage selon la revendication 13 ou 14, caractérisé en ce que dans la feuille adhésive sont intégrées des fibres de verre, matière synthétique ou carbone.

16. Elément de vitrage selon l'une des revendications précédentes, caractérisé en ce que les fils d'âme (6) sont revêtus de matériau dont l'indice de réfraction est supérieur à celui du matériau dont sont constitués les fils d'âme.

17. Elément de vitrage avec au moins deux panneaux parallèles (2, 9) perméables à la lumière et une couche de fibres reliée à l'une des surfaces de couverture du premier panneau (2), couche constituée de fibres s'étendant parallèlement aux faces de couverture de ce panneau, caractérisé en ce que la couche de fibres est constituée par la couche de couverture (4) d'un tissu ou d'un tricot (3) d'espacement textile imprégné de résine, qui est constitué de cette couche de couverture et de fils d'âme (6) qui en sortent, s'étendant transversalement par rapport à la couche de couverture, dont les extrémités libres sont disposées sur le deuxième panneau (9).

18. Elément de vitrage selon la revendication 17, caractérisé en ce que les fils d'âme (6) sont fixes au deuxième panneau (9) par une couche intermédiaire (12).

19. Elément de vitrage selon la revendication 18, caractérisé en ce que la couche intermédiaire (12) est constituée d'une couche de résine ou d'une feuille adhésive.

20. Elément de vitrage selon la revendication 18, caractérisé en ce que la couche intermédiaire (12) est constituée d'un matériau transparent au rayonnement thermique.

21. Elément de vitrage selon l'une des revendications 11 à 20, caractérisé en ce qu'une étanchéité de bordure (10), étanche à la diffusion, est prévue du côté extérieur du tissu d'espacement (3).

22. Elément de vitrage selon la revendication 21, caractérisé en ce que l'étanchéité de bordure (10), étanche à la diffusion, est constituée par un soudage direct des panneaux.

23. Elément de vitrage selon l'une des revendications 11 à 22, caractérisé en ce que l'espace intermédiaire entre panneaux est au moins partiellement mis sous vide.

24. Elément de vitrage selon l'une des revendications 11 à 22, caractérisé en ce que l'espace intermédiaire entre panneaux est rempli d'un matériau isolant thermique.

25. Elément de vitrage selon la revendication 24, caractérisé en ce que le matériau isolant thermique est un gaz.

26. Elément de vitrage selon l'une des revendications 11 à 22, caractérisé en ce que l'espace intermédiaire entre panneaux est rempli d'un matériau de protection contre le feu.

27. Elément de vitrage selon la revendication 26, caractérisé en ce que le matériau de protection contre le feu est constitué par un gel ayant la transparence du verre, formé à partir d'un polymère, dans lequel est noyée une solution saline minérale, contenant une forte proportion d'eau.

28. Elément de vitrage selon l'une des revendications précédentes, caractérisé en ce qu'aucune résine n'est appliqué à peu près à mi-hauteur des fils d'âme (6).

29. Elément de vitrage selon l'une des revendications précédentes, caractérisé en ce que l'un des panneaux (2, 9) est réalisé de façon à absorber le rayonnement.

30. Elément de vitrage selon l'une des revendications précédentes, caractérisé en ce qu'un revêtement à faible coefficient E (13) est appliqué au moins sur l'un des panneaux (2, 9).

31. Elément de vitrage selon la revendication 30, caractérisé en ce que le revêtement à faible coefficient E (13) est appliqué sur la face extérieure d'un des panneaux (2, 9) par pyrolyse.

32. Elément de vitrage selon la revendication 30, caractérisé en ce que le revêtement à faible coefficient E (13) est disposé dans l'espace intermédiaire entre panneaux et délimite au moins partiellement un volume de milieu gazeux ou de matériau en feuille (18) perméable au rayonnement thermique.

33. Elément de vitrage selon l'une des revendications 11 à 32, caractérisé en ce que l'élément de vitrage (1) est disposé de façon à pouvoir être retourné de 180°.

34. Elément de vitrage selon l'une des revendications 11 à 33, caractérisé en ce qu'au moins un autre panneau (15, 16) est disposé dans l'espace intermédiaire entre panneaux.

35. Elément de vitrage selon la revendication 34, caractérisé en ce que les panneaux (15, 16), disposés dans l'espace intermédiaire entre panneaux, sont chacun reliés, au moyen d'un tissu ou d'un tricot d'espacement (3) par interaction de forces, à au moins l'un des panneaux (2, 9) situés extérieurement.

36. Elément de vitrage selon l'une des revendications 34 ou 35, caractérisé en ce que le panneau, disposé dans l'espace intermédiaire entre les panneaux, est constitué par une plaque ou une feuille en matière synthétique (19).

37. Elément de vitrage selon l'une des revendications 34 à 36, caractérisé en ce que le panneau (15, 16; 19), disposé dans l'espace intermédiaire entre panneaux, présente sur au moins une de ses surfaces un revêtement à faible coefficient E (13).

38. Elément de vitrage selon l'une des revendications précédentes, caractérisé en ce que dans le tissu d'espacement (3) sont prévus des évidements destinés à constituer des surfaces partiellement transparentes.

39. Elément de vitrage selon la revendication 38, caractérisé en ce que le tissu d'espacement (3) est constitué de bandes disposées en forme de lignes ou de trames.

40. Elément de vitrage selon l'une des revendications précédentes, caractérisé par son utilisation comme verre de sécurité à effet d'isolation thermique, en particulier pour des vitrages de toit ou de plafond, des habillages de façade ou des éléments de porte, à titre de verre anti-effraction ou bien de verre de protection contre le bruit.

41. Procédé de fabrication d'un élément de vitrage selon la revendication 1, caractérisé en ce que sur la face de couverture d'un panneau ou d'une plaque (2) perméable a la lumière est posé, sur toute la surface, un tissu d'espacement (3) imprégné de résine, constitué d'au moins deux couches de couverture (4, 5) et de fils d'âme (6) s'étendant transversalement par rapport aux couches de couverture, et le corps formant couche constitué est comprimé dans un moule de pressage, si bien que le panneau (2) se lie de façon adhésive sur l'une des couches de couverture (4, 5) du tissu (3), suite à quoi, le moule de pressage est ouvert et la résine est durcie.

42. Procédé selon la revendication 41, caractérisé en ce qu'avant le pressage, un deuxième panneau ou plaque (9) est appliqué sur le corps en couche.

43. Procédé selon l'une des revendications 41 ou 42, caractérisé en ce que le moule de pressage est ouvert dans un but de calibrage, jusqu'à atteindre l'espacement souhaité entre les couches de couverture (4, 5).

44. Procédé de fabrication d'un élément de vitrage selon la revendication 11, caractérisé en ce qu'un tissu d'espacement (3), au moins partiellement imprégné de résine, constitué d'au moins deux couches de couverture (4, 5) et de fils d'âme (6) s'étendant transversalement par rapport aux couches de couverture, est durci et ensuite est inséré, d'une manière définissant un espacement, entre au moins deux panneaux ou plaques (2, 9), et est pressé avec effet d'adhésion.

45. Procédé selon la revendication 44, caractérisé en ce que les couches de couverture (4, 5) du tissu d'espacement (3) sont dotées d'une feuille adhésive.

46. Procédé selon l'une des revendications 41 à 44, caractérisé en ce que le revêtement en résine des couches de couverture (4, 5) du tissu d'espacement (3) est durci, avant revêtement à la résine des fils d'âme (6) et/ou de la zone de bordure des couches de couverture.

47. Procédé de fabrication d'un élément de vitrage selon la revendication 17, caractérisé par les étapes ci-après :

a) un tissu d'espacement (3) imprégné de résine, constitué d'une couche de couverture (4) et de fils d'âme sortant de la couche de couverture, est pressé avec effet adhésif avec un premier panneau;

b) la résine est durcie et les fils d'âme (6) sont dressés avec un effet de rigidification;

c) un deuxième panneau (9) est posé sur les extrémités libres des fils d'âme (6); et

d) le corps en plaque est doté d'un joint d'étanchéité de bordure (10) faisant le pourtour et est au moins partiellement mis sous vide.

Fig.1    Fig.2    Fig.3    Fig.4    Fig.6    Fig.5

Fig.7    Fig.8    Fig.9

Fig.10    Fig.11    Fig.12

Fig.13

Fig.14

Fig.15